# EUROPEAN PATENT APPLICATION

(11) **EP 2 639 437 A1**
(43) Date of publication of application: **18.09.2013**
(21) Application number: 12160010.0
(22) Date of filing: 16.03.2012
(51) Int. Cl.: F02D 41/30, F01N 5/02

(54) **Control system for an engine assembly**

(71) Applicant: Perkins Engines Company Limited, Cambridgeshire PE1 5NA (GB)
(72) Inventor: The designation of the inventor has not yet been filed
(74) Representative: Widdowson, Nicholas Edward

(57) **Abstract**

A method for controlling an engine assembly and an engine assembly, said engine assembly comprising: an engine configured to convert energy in a fuel into primary output energy and secondary output energy wherein the primary output energy consists solely of primary output kinetic energy in the form of a rotating crankshaft for onward transmission to a gearbox and/or a load and the secondary output energy comprises secondary output kinetic energy and secondary output thermal energy. The assembly further includes a recovery device configured to convert the secondary output energy to potential energy; a transducer suitable for converting the potential energy to tertiary energy for conversion either directly or by the engine into primary output energy; and a controller configured to implement an equivalent consumption minimization strategy in order to control overall consumption of fuel by continuously optimising a proportion of the primary output energy derived from the energy in the fuel and a proportion of the primary output energy derived from the tertiary energy.

## Description

### Technical Field

A control system for an engine assembly using equivalent consumption minimisation strategy.

### Background

Internal combustion engines generally have efficiencies of well below 50%. Increasing energy efficiency is highly desirable for improving fuel economy, making better use of energy resources and meeting regulatory targets. Efforts to reduce fuel consumption by altering the engine and its control system to maximise the proportion of potential energy in the fuel which is converted into useful kinetic energy in the crankshaft are well known.

While these techniques are, of course, beneficial for improving engine efficiency, it is necessarily the case that an engine produces secondary forms of energy (incidental to the kinetic energy of the crankshaft) which are often not usefully employed.

Against this background, there is provided an engine assembly as disclosed herein.

### Summary of the disclosure

The disclosure provides an engine assembly 1 comprising:
an engine 20 configured to convert energy in a fuel 15 into primary output energy 25 and secondary output energy 35 wherein the primary output energy 25 consists solely of primary output kinetic energy in the form of a rotating crankshaft for onward transmission to a gearbox and/or a load 1000 and the secondary output energy 35 comprises secondary output kinetic energy and secondary output thermal energy;
a recovery device 40 configured to convert the secondary output energy 35 to potential energy;
a transducer 60 suitable for converting the potential energy 45 to tertiary energy 65 for conversion by the engine 20 into primary output energy 25; and
a controller 100 configured to implement an equivalent consumption minimization strategy in order to control overall consumption of fuel by continuously optimising a proportion of the primary output energy 25 derived from the energy in the fuel 15 and a proportion of the primary output energy 25 derived from the tertiary energy 65.

An embodiment of the invention will now be described, by way of example only, with reference to the accompanying drawings in which:

### Brief description of the drawings

Figure 1 is a schematic diagram showing the features and embodiment of the engine assembly of the disclosure;
Figure 2 is a schematic diagram showing example inputs and outputs of the ECMS;

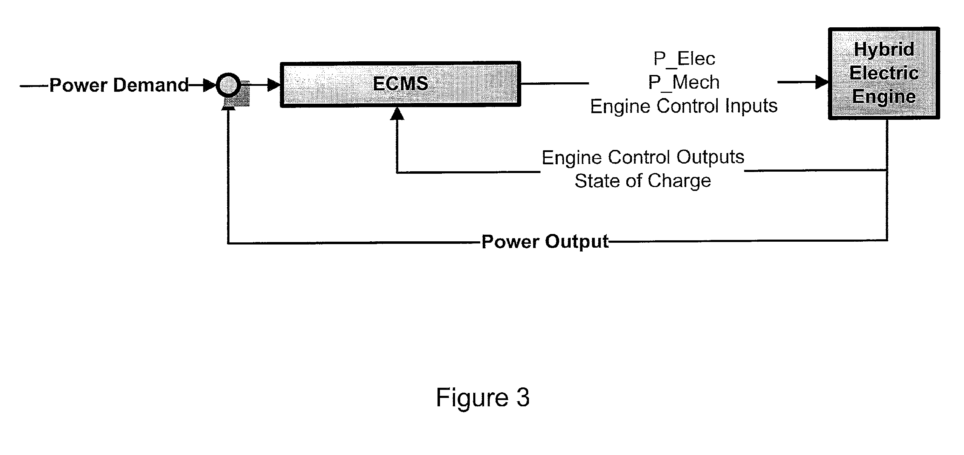

Figure 3 is a schematic diagram showing an implementation of the arrangement of the disclosure;

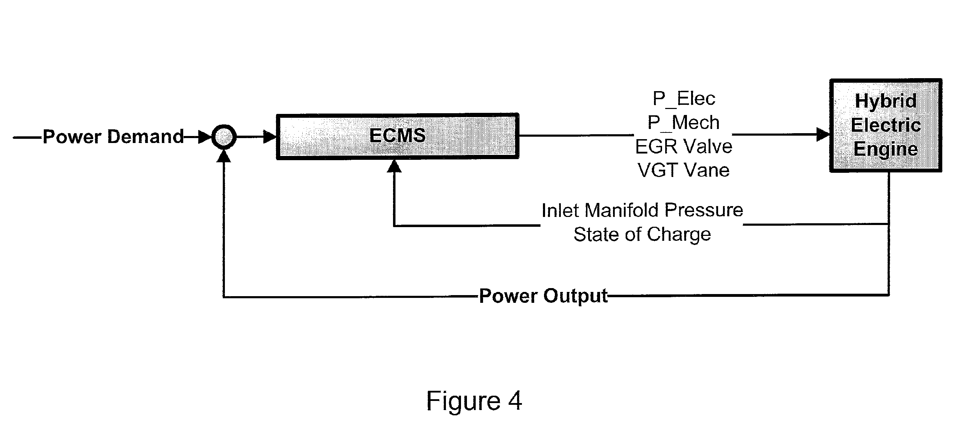

Figure 4 is a schematic diagram showing a more specific implementation of the arrangement of Figure 3;

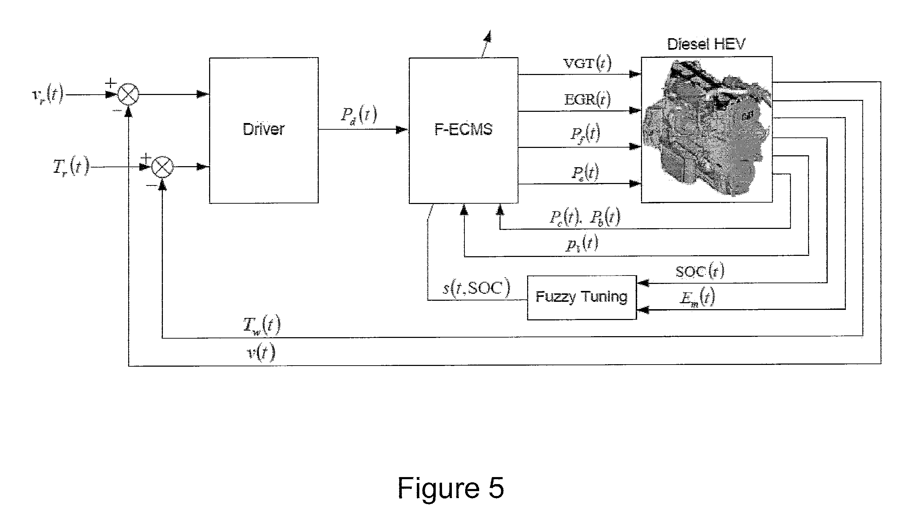

Figure 5 is a schematic diagram of a specific implementation of the arrangement of the disclosure.

### Detailed description

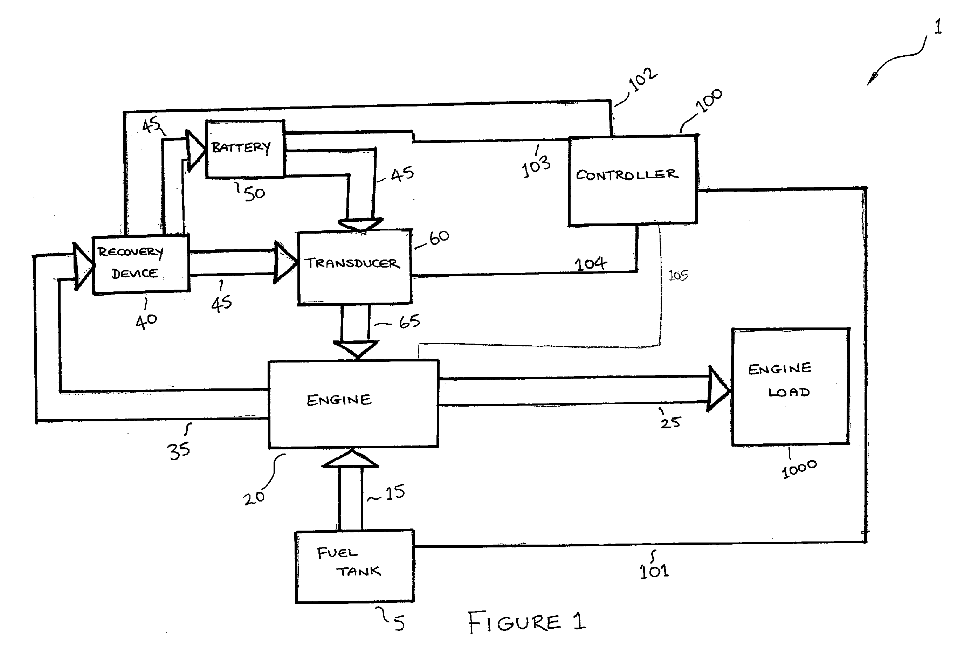

Referring to Figure 1, there is illustrated an engine assembly 1 comprising an engine 20, a recovery device 40, a transducer 60 and a controller 100.

The engine 20 is configured to receive fuel 15 from a fuel tank 5 and to convert energy in the fuel into primary output energy 25 and secondary output energy 35. The primary output energy 25 may take the form of kinetic energy in a rotating crankshaft. The rotating crankshaft may be connected to an engine load 1000, perhaps via a gear box (which may or may not be considered to constitute a part of a load).

The secondary output energy 35 may comprise secondary output kinetic energy and/or secondary output thermal energy. The secondary output energy 35 may be supplied to the recovery device 40. The recovery device 40 may be configured to convert the secondary output energy 35 to potential energy 45. Optionally, the engine assembly 1 comprises a potential energy storage feature 50. Where the potential energy 45 is electrical potential energy, the potential energy storage feature 45 may be a battery 50.

Potential energy 45, either supplied directly from the recovery device 40 or from the potential energy storage feature 50 may be supplied to the transducer 60. The transducer 60 is suitable for converting the potential energy 45 into tertiary energy 65 for conversion by the engine 20 into primary output energy 25 (and potentially also secondary output energy 35).

The controller 100 is configured to implement an equivalent consumption minimisation strategy. This may be achieved using a data library which may be derived from offline engine modelling. Alternatively, equivalent consumption minimisation strategy may be achieved by online calculations in the engine controller. The controller 100 controls supply of fuel 15 from the fuel tank 5 to the engine 20 and supply of tertiary energy 65 from the transducer 60 to the engine 20. In particular, it controls the ratio of energy to be derived in the engine 20 from fuel 15 to energy to be derived in the engine from tertiary energy 65.

The controller 100 comprises control lines 101, 102, 103, 104 and 105 for controlling the fuel supply 15, the recovery device 40, where present a battery 50, the transducer 60 and the engine 20, respectively. The control lines may exercise control directly or indirectly. In respect of the fuel supply 15 control, this may be achieved, for example, by controlling the demanded engine load on the crankshaft.

EMCS is achieved by applying a search algorithm wherein the algorithm attempts to find a minimum fuel consumption for a given set of conditions. In an online system the data resulting in minimum predicted fuel consumption would be calculated in real time. In an offline system, a model of the system would attempt to predict the best possible outcome and output it to the data library for online retrieval by the controller 100. It may be that expected drive cycles can be used to identify optimised values for the desired condition. This is particularly relevant when using an offline model.

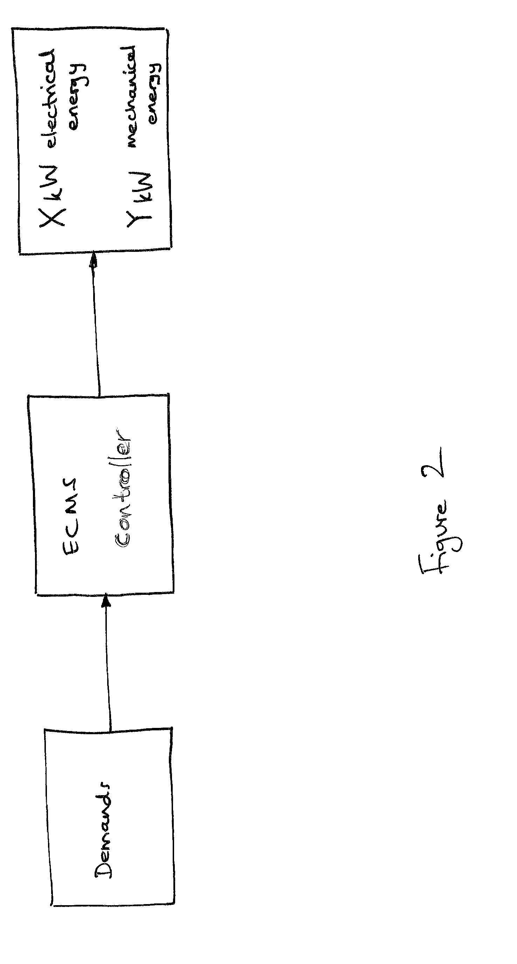

In simple terms, the input and output of the ECMS are shown in Figure 2. The input represents the demands while the corresponding output indicates a predicted most efficient solution of X kW of energy to be derived from tertiary energy 65 and Y kW of energy to be derived from fuel 15.

In a more specific embodiment of the invention, the secondary output energy 35 may comprise secondary output kinetic energy 35. Specifically, the secondary output kinetic energy 35 may comprise kinetic energy of an exhaust gas produced in the engine 20. In this case, the recovery device 40 may comprise an electric generator 40 for converting the secondary output kinetic energy 35 of the gas into potential energy 45 which is electrical potential energy 45. Electrical potential energy 45 may or may not be transmitted to a battery 50 for storage. In this embodiment, the transducer 60 may comprise a motor. The motor 60 may receive potential energy 45 either directly from the electric generator 40 or from the battery 50. In this embodiment, it may be that the generator 40 and the electric motor 60 are a single electric machine. Furthermore, the electric generator 40 and electric motor 60 (whether or not a single machine) may be part of a turbo charger.

The battery 50 may comprise additional sources of electrical potential energy and additional drains of electrical potential energy beyond those explicitly described. That is to say, the battery may comprise inputs other than that from the recovery device 40 and outputs other than that from that to the transducer 60.

In an alternative embodiment, the recovery device 40 may comprise a thermo electric device for conversion of secondary output thermal energy 35. This second embodiment may or may not include a battery 50 or other electrical potential energy storage device for storage or electrical potential energy derived in the electric device 40.

Other alternative embodiments fall within the scope of the appended claims. In particular, any conceivable recovery of secondary energy 35 by means of a recovery device 40 and redeployment of that energy using a transducer 60 to provide energy 65 back to an engine 20 for more efficient use is contemplated.

The arrangement of the disclosure recognises the significance of engines generally having significantly lower efficiencies than transmission systems to which the engine may be coupled. At the heart of the disclosure is therefore an attempt not simply to recover secondary energy which would not otherwise usefully be used, but to seek to recover that secondary energy as close to the source of that secondary energy as possible. In the case of an engine, it might, for example be the case that 70% of the energy produced constitutes secondary energy. Therefore, even if a small proportion of the 70% secondary energy can be recovered for useful use either immediately or a later time, this represents a significant energy efficiency advantage. Therefore the application of ECMS to an engine assembly may yield better efficiency improvements than when applied to a transmission system comprising an engine assembly.

Furthermore, the use of an equivalent consumption minimisation strategy allows for predicting how best to achieve a particular desired output in terms of availability of primary energy directly from the fuel and availability of primary energy derived from recovery of secondary energy via the arrangement of the disclosure. Furthermore, the strategy allows for predictions about likely future engine desired behaviour to reduce overall fuel consumption for the same benefit over an extended period.

The ECMS control techniques of the arrangement of the disclosure may be used in combination with other known control techniques including, but not limited to, fuzzy logic and feedback linearization.

Control lines 102, 103, 104, 105 may not go directly from the controller 100 to their respective engine assembly features. Instead, one or more of these control lines may go via one or more other lower level controllers for more specialised onward processing, the result of which being sent to the respective engine assembly features. Such lower level controllers include, but are not limited to an MPC or EMPC controller.

The detailed description of this disclosure has been made with respect to a small number of embodiments. The scope of the present disclosure is to be considered in light of the appended claims. It should not be inferred that one or more specific implementations of the desired description is intended to limit the scope of the claims beyond the scope of the claims themselves.

## Claims

1. An engine assembly 1 comprising:
an engine 20 configured to convert energy in a fuel 15 into primary output energy 25 and secondary output energy 35 wherein the primary output energy 25 consists solely of primary output kinetic energy in the form of a rotating crankshaft for onward transmission to a gearbox and/or a load 1000 and the secondary output energy 35 comprises secondary output kinetic energy and secondary output thermal energy;
a recovery device 40 configured to convert the secondary output energy 35 to potential energy;
a transducer 60 suitable for converting the potential energy 45 to tertiary energy 65 for conversion either directly or by the engine 20 into primary output energy 25; and
a controller 100 configured to implement an equivalent consumption minimization strategy in order to control overall consumption of fuel by continuously optimising a proportion of the primary output energy 25 derived from the energy in the fuel 15 and a proportion of the primary output energy 25 derived from the tertiary energy 65.

2. The engine assembly 1 of Claim 1, the engine assembly 1 further comprising a potential energy storage device 50 for storing the potential energy derived in the recovery device 40 for possible later use by the transducer 60.

3. The engine assembly 1 of Claim 2, the engine assembly 1 further comprising an output for providing potential energy 45 from the potential energy storage device 50 to a device outside the engine assembly 1.

4. The engine assembly 1 of any preceding claim wherein the secondary output kinetic energy 35 comprises kinetic energy of a gas, said kinetic energy of the gas being a product of conversion of the energy in a fuel 15 into primary output energy 25 and secondary output energy 35.

5. The engine assembly 1 of any preceding claim wherein the potential energy 45 comprises electrical potential energy 45.

6. The engine assembly 1 of any preceding claim wherein the recovery device 40 comprises an electric generator 40.

7. The engine assembly 1 of any preceding claim wherein the transducer 60 comprises an electric motor 60.

8. The engine assembly 1 of Claim 7 when dependent on Claim 6 wherein an electric machine comprises both the recovery device 40 and the transducer 60.

9. The engine assembly 1 of any preceding claim wherein one or more turbo chargers comprise the recovery device 40 and/or the transducer 60.

10. The engine assembly 1 of any preceding claim wherein the recovery device 40 comprises a thermoelectric device 40 for conversion of secondary output thermal energy 35.

11. The engine assembly 1 of any preceding claim wherein the controller 100 outputs data to one or more further controllers for further processing to provide further processed data for controlling the engine assembly 1, wherein one or more of the further controllers may, optionally, implement EMPC control.

12. A method for controlling an engine assembly 1, the engine assembly 1 comprising:
an engine 20 configured to convert energy in a fuel 15 into primary output energy 25 and secondary output energy 35 wherein the primary output energy 25 consists solely of primary output kinetic energy in the form of a rotating crankshaft for onward transmission to a gearbox and/or a load 1000 and the secondary output energy 35 comprises secondary output kinetic energy and secondary output thermal energy;
a recovery device 40 configured to convert the secondary output energy 35 to potential energy 45; and
a transducer 60 suitable for converting the potential energy 45 to tertiary energy 65 for conversion by the engine 20 into primary output energy 25;
the method comprising:
implementing an equivalent consumption minimization strategy in order to control overall consumption of fuel by continuously optimising a proportion of the primary output energy 25 derived from the energy in the fuel 15 and a proportion of the primary output energy 25 derived from the tertiary energy 65.

13. The method of Claim 12 wherein the step of implementing the equivalent consumption minimization strategy comprises either:
using a model derived data library of the controller 100 to retrieve a value representative of a proportion of the primary output energy 25 to be derived from the energy in the fuel 15 and a proportion of the primary output energy 25 to be derived from the tertiary energy 65 in order to control overall consumption of fuel 15; or
performing a real time model based calculation of a value representative of a proportion of the primary output energy 25 to be derived from the energy in the fuel 15 and a proportion of the primary output energy 25 to be derived from the tertiary energy 65 in order to control overall consumption of fuel 15.

14. The method of Claim 12 or Claim 13 wherein the method further comprises:
obtaining either by online calculation or by retrieval from a data library a set of engine parameter values predicted to achieve a desired result using the engine 20 to convert energy in the fuel 15 into primary output energy 25; and
obtaining either by online calculation or from the data library a set of engine parameter values predicted to achieve the same desired result using the transducer 60 to convert the potential energy 45 to tertiary energy 65 for conversion by the engine 20 into primary output energy 25.

15. The method of any of Claims 12, 13 and 14, wherein the equivalent consumption minimization strategy provides values for control signals 101, 102, 103, 104, 105 which determine fuel efficient strategy for a specified future period based on likely future engine assembly behaviour requirements according to the model.
